# EUROPÄISCHE PATENTSCHRIFT

(11) **EP 0 863 173 B1**
(45) Veröffentlichungstag und Bekanntmachung des Hinweises auf die Patenterteilung: **08.09.2004**
(21) Anmeldenummer: 98102866.5
(22) Anmeldetag: 19.02.1998
(51) Int. Cl.: C08J 3/03

(54) **Verfahren zur Herstellung von stabilen, feinteiligen Polymerdispersionen**
Process for preparing stable finely divided polymer dispersions
Procédé pour préparer des dispersions de polymères finement divisés

(30) Priorität: 03.03.1997 DE 19708606
(43) Veröffentlichungstag der Anmeldung: 09.09.1998
(73) Patentinhaber: Polymer Latex GmbH & Co. KG, 45764 Marl (DE)
(72) Erfinder: Hoch, Martin, Dr., 42657 Solingen (DE); Elbert, Rainer, Dr., 51467 Bergisch Gladbach (DE); Klinksiek, Bernd, 51429 Bergisch Gladbach (DE)
(74) Vertreter: Lüdcke, Joachim Moritz

(56) Entgegenhaltungen:
- EP-A- 0 101 007
- EP-A- 0 384 165
- EP-A- 0 685 544
- EP-A- 0 805 171
- GB-A- 1 055 820
- US-A- 2 944 038

## Beschreibung

Die vorliegende Erfindung betrifft ein Verfahren zur Herstellung von stabilen, feinteiligen Polymerdispersionen sowie die Verwendung der nach dem erfindungsgemäßen Verfahren hergestellten Polymerdispersionen zur Herstellung von Tauchartikeln, beschichteten Artikeln und von Klebstoffen.

Das Emulgieren von Polymerlösungen, insbesondere Elastomerlösungen, in wäßrigen Emulgatorlösungen ist im Prinzip bekannt und beispielsweise beschrieben in US 3 226 349, US 2 944 038, US 3 062 767, US 4 243 566, US 4 070 325, US 3 892 703, US 3 998 772, US 4 177 177, EP-A 0 339 559, DE-A 1 965 934 und WO 95/14729. Beschrieben werden ferner Verfahren zur Emulgierung in J. Polym. Sci. C, 16 (1967) 2814 und in Annu. Meet. Proc. Int. Inst. Synth. Rubber Prod. 16 (1975), 5.

Nach den bekannten Verfahren wird üblicherweise die Polymerdispersion bzw. -emulsion so hergestellt, daß man eine Polymerlösung als organische Phase mit einer wäßrigen Phase unter Anwendung hoher Scherleistung kontaktiert. Gewöhnlich sind Emulgatoren oder Emulgatorgemische mit weiteren Hilfsstoffen entweder in der wäßrigen Phase alleine oder in beiden Phasen zugegen, um die Emulgierwirkung zu verbessern. Zur scherinduzierten Dispergierung der organischen, polymerhaltigen Phase in der wäßrigen Phase (Öl in Wasser-Emulsion) werden verschiedenste Aggregate verwendet wie Hochdruck(spalt)homogenisatoren (z.B. von der Fa. APV Schröder), Ultraschall-Disperser, Ultra-Turrax, Kotthoff-Mischsirenen, Dissolverscheiben, Kolloid-Mühlen sowie verschiedenste Ausführungen von diversen Düsen. Zu Auswahl und Vergleich von Dispergiermschinen zur Dispersionsherstellung kann auf die dem Fachmann bekannte Literatur verwiesen werden, z.B. P. Walstra, Formation of Emulsions, In: P. Becher, Encyclopedia of Emulsion Technology, Vol.1, New York, Basel 1983. Übereinstimmend wird beschrieben, daß die Auswahl von Dispergiermaschinen nach der volumenbezogenen Leistungen erfolgt. Zur Herstellung von feinteiligen Emulsionen (< 1 µm) sind Dispergiermaschinen mit hohen volumenbezogenen Leistungen erforderlich, wie z.B. die erwähnten Hochdruckhomogenisatoren. Mit Maschinen nach dem Rotor/Stator-Prinzip lassen sich so feinteilige Emulsionen kaum noch herstellen.

Die eingesetzten Scheraggregate können in Reihe geschaltet werden oder ein Aggregat mehrfach durchlaufen werden.

Bei den bekannten Verfahren wird das Lösungsmittel durch beispielsweise Strippen, durch Druckentspannung (Flashen) oder durch andere destillative Verfahren entfernt. Weiterhin werden die so erhaltenen relativ niedrig konzentrierten Emulsionen (Dünnlatex) z.B. durch Destillation, Zentrifugation oder Aufrahmung auf die gewünschte Endkonzentration gebracht.

Nachteilig bei den bekannten Verfahren zur Herstellung von Polymerdispersionen ist insbesondere, daß sehr hohe Scherleistungen aufgebracht werden müssen, um überhaupt stabile Emulsionen zu erhalten. Darüber hinaus ist die großtechnische Ausführung der bekannten Verfahren zur Herstellung von Polymerdispersionen apparativ sehr aufwendig und energieintensiv. Weiterhin ist nachteilig, daß nach den bekannten Verfahren größere Mengen an Emulgatoren erforderlich sind, um stabile Emulsionen zu erhalten. Für die weitere Verwendung der Polymerdispersionen müssen die großen Mengen an Emulgatoren dann enfernt werden, da diese sich nachteilig auf die Eigenschaften der aus den Polymerdispersionen hergestellten Produkten auswirken können.

Es bestand daher die Aufgabe, ein einfaches Verfahren zur Herstellung von Polymerdispersionen zur Verfügung zu stellen, das die zuvor geschilderten Nachteile des Standes der Technik vermeidet. Darüber hinaus soll mit dem erfindungsgemäßen Verfahren sichergestellt werden, daß stets stabile Polymerdispersionen erhalten werden, die einen bestimmten, definierten Polymerteilchendurchmesser besitzen.

Gegenstand der Erfindung ist daher ein Verfahren zur Herstellung von stabilen Polymerdispersionen mit Polymerteilchengrößen von 0,1 bis 10 µm [d-50, bestimmt mittels Ultrazentrifuge], das dadurch gekennzeichnet ist, daß man eine Wasser-in-Öl-Emulsion, bestehend aus einem in mit Wasser nicht mischbaren, organischen Lösungsmittel gelösten Polymer (organische Phase) und einer wäßrigen Phase, wobei die Viskosität der organischen Phase 1,0 bis 20.000 mPa s (gemessen bei 25°C), die Grenzflächenspannung zwischen organischer und wäßriger Phase 0,01 bis 30 mN/m, die Teilchengröße des in der organischen Phase emulgierten Wassers 0,2 bis 50 µm beträgt und das Volumenverhältnis von organischer Phase zu wäßriger Phase im Bereich von 80:20 bis 20:80 liegt, einer Scherung mit einer Scherleistung von 1 10³.bis 1 10⁸ Watt pro cm³ unterwirft, wobei sich die Wasser-in-Öl-Emulsion in eine Öl-in-Wasser-Emulsion umkehrt.

Die nach dem erfindungsgemäßen Verfahren hergestellten stabilen Polymerdispersionen besitzen bevorzugt eine Polymerteilchengröße von 0,1 bis 50 µm, insbesondere 0,1 bis 2,0 µm. Die Bestimmung der Teilchengröße erfolgte mittels Ultrazentrifuge nach J. Coll. Polym. Sci., 267 (1989) 1113.

Die Viskosität der organischen Phase in der Wasser-in-Öl-Emulsion beträgt bevorzugt 10 bis 20.000 mPas insbesondere 100 bis 5000 mPas. Die Grenzflächenspannung zwischen organischer und wäßriger Phase liegt bevorzugt im Bereich von 0,5 bis 30, insbesondere 0,5 bis 5 mN/m. Die Teilchengröße des in der organischen Phase emulgierten Wassers beträgt bevorzugt 1 bis 25 µm, insbesondere 1 bis 10 µm, und das Volumenverhältnis von organischer Phase zu wäßriger Phase liegt bevorzugt im Bereich von 70:30 bis 30:70, insbesondere 60:40 bis 40:60. Die Scherleistung liegt bevorzugt bei 10⁶ bis 10⁷ Watt pro cm³.

Die nach dem erfindungsgemäßen Verfahren einer Scherung zu unterwerfenden Wasser-in-Öl-Emulsion kann in üblicher Weise hergestellt werden, z.B. indem man die das Polymer enthaltende Phase in einen Rührwerksbehälter vorlegt. Die wäßrige, gegebenenfalls Emulgator enthaltende Phase wird eingeleitet und so emulgiert, daß die zuvor angegebenen Bereiche für die Viskosität, die Grenzflächenspannung und die Teilchengröße der Wasser-in-Öl-Emulsion erreicht werden.

Die Phasenumkehrung der Wasser-in-Öl-Emulsion zur Öl-in-Wasser-Emulsion erfolgt beim Durchgang durch eine geeignete Homogenisiermaschine, wie Hochdruckhomogenisatoren, Kolloid-Mühlen und Zahnkranzdispergatoren.

Besonders bevorzugt wird nach dem erfindungsgemäßen Verfahren die einer Scherung zu unterwerfenden Wasser-in-Öl-Emulsion hergestellt, indem man die organische Phase in einem Behälter vorlegt und über eine Homogenisierdüse rezirkuliert und in einem definierten Stoffstrom die wäßrige Phase vor einer Homogenisierdüse zufügt und dabei die Wasserphase feinst zerteilt. Bei diesem Schritt wird soviel wäßrige Phase zudosiert, bis die Phaseninversion erreicht ist (diskontinuierliches Verfahren).

Bei kontinuierlicher Dispergierung nach dem erfindungsgemäßen Verfahren erfolgt die Dispergierung in der Art, daß die wäßrige Phase in mehreren, hintereinander geschalteten Emulgierschritten definiert der organischen Phase zugesetzt wird.

Als Polymere, die in das erfindungsgemäße Verfahren eingesetzt werden können, eignen sich sowohl thermoplastische Polymere als auch elastische Polymere (Kautschuke). Beispielsweise werden als Polymere genannte: Polyolefine, wie Polyethylen, Polypropylen, Ethylen-α-Olefin-Copolymere, wie Ethylen-Propen-Copolymere, Ethylen-Buten-Copolymere, Ethylen-Penten-Copolymere, Ethylen-Hexen-Copolymere, Ethylen-Hepten-Copolymere sowie Ethylen-Octen-Copolymere. Selbstverständlich können auch die entsprechenden Isomere als Grundlage für die Polyolefine dienen. Besonders bevorzugt werden als Polyolefine Polyisobutylene und deren Folgeprodukte genannt, wie Halogen-Polyisobutylene und Copolymere aus Isobutylen und Methylstyrol, Isopren sowie chloriertes Polyethylen (CM) oder chlorsulfoniertes Polyethylen (CSM). Darüber hinaus können als Polymere eingesetzt werden: Copolymere des Ethylens mit polaren Monomeren wie Vinylacetat, Vinylester, Acrylate, Methacrylate, Maleinsäure, Maleinsäureanhydrid, (Meth)acrylsäure, Fumarsäure sowie deren Ester. Weiterhin kommen als Polymere in Frage: Dienpolymerisate wie Polybutadien, Polyisopren, Polydimethylbutadien sowie deren Copolymere untereinander oder mit Styrol oder Styrolderivaten, wie α-Methylstyrol mit Acrylnitril, Methacrylnitril mit Acrylaten oder Methacrylaten. Die obengenannten Dienpolymerisate können auch in Form von Terpolymerisaten oder Vielfach-Copolymerisaten vorliegen. Weiterhin sind als Polymere geeignet: Naturkautschuk und dessen Abkömmlinge, Polychloropren und Polydichlorbutadien sowie deren Copolymerisate, darüber hinaus Styrol-Butadien-Blockcopolymerisate. Außerdem kommen nachbehandelte Polymere in Frage, wie hydrierter Nitrilkautschuk sowie hydrierte Styrol-Butadien-Blockcopolymerisate. Außerdem können als Polymere eingesetzt werden: Polyurethane, Polyester, Polyesteramide, Polyether, Polycarbonate und deren Abwandlungen.

Bevorzugt werden als Polymere in das erfindungsgemäße Verfahren eingesetzt: Polyisobutylene und Copolymere aus Isobuten und Isopren, Ethylen-Propylen-Copolymere, Ethylen-Propylen-Dien-Copolymere, SBR, NBR und HNBR sowie Polycarbonate und Polyurethane, insbesondere Copolymerisate von Isobutylen mit Isopren sowie deren halogenierte Analoge (Butylkautschuk, halogenierter Butylkautschuk).

Als mit Wasser nicht mischbare, organische Lösungsmittel, in denen die zuvor genannten Polymere gelöst werden, seien genannt: aliphatische-, aromatische-, araliphatische- und/oder cycloaliphatische Kohlenwasserstoffe.

Die Auswahl kann nach praktischen Gesichtspunkten erfolgen. Der Fachmann wird solche Lösungsmittel verwenden, die es gestatten, hohe Feststoffkonzentrationen bei niedrigen Viskositäten zu erhalten.

Denkbar ist auch die Verwendung von Gasen, wie z.B. CO₂ als Lösungsmittel, wenn sie sich im überkritischen Zustand befinden. Besonders bevorzugt werden als Lösungsmittel eingesetzt: Hexan, Toluol, Methylenchlorid, Benzol, Chlorbenzol, Methylethylketon sowie deren Gemische untereinander.

Für das erfindungsgemäße Verfahren können solche Emulgatoren eingesetzt werden, die auf dem Gebiet der Polymerdispersion bekannt und üblich sind. Die Emulgatoren werden im allgemeinen der wäßrigen Phase zugefügt. Beispielsweise können als Emulgatoren in das erfindungsgemäße Verfahren eingesetzt werden: aliphatische und/oder aromatische Kohlenwasserstoffe mit 8 bis 30 Kohlenstoffatomen, die eine hydrophile Endgruppe besitzen, wie eine Sulfonat-, Sulfat-, Carboxylat-, Phosphatoder Ammonium-Endgruppe. Weiterhin eignen sich als Emulgatoren nichtionische Tenside mit funktionellen Gruppen, wie Polyalkohole, Polyether und/oder Polyester.

Im Prinzip sind alle in der Technik üblichen Emulgatoren und Tenside einsetzbar, die zur Stabilisierung von Öl- und Polymerdispersion in Wasser geeignet sind. Bevorzugt werden als Emulgatoren eingesetzt: Fettsäuresalze, wie die Natrium und/oder Kaliumsalze der Ölsäure, die entsprechenden Salze der Alkylarylsulfonsäure, der Naphthylsulfonsäure und deren Kondensationsprodukte z.B. mit Formaldehyd, sowie die entsprechenden Salze der Alkylbernsteinsäure und der Alkylsulfobernsteinsäure. Selbstverständlich ist es auch möglich, die Emulgatoren in beliebiger Mischung untereinander einzusetzen.

Die Auswahl der geeigneten Emulgatoren richtet sich insbesondere nach den zu emulgierenden Polymeren, nach den eingesetzten Lösungsmitteln und den erwünschten Endeigenschaften der erfindungsgemäß hergestellten Dispersionen.

Vorrangig sind solche Emulgatoren auszuwählen, die die Grenzflächenspannung zwischen organischer Polymerphase und wäßriger Phase ausreichend zu erniedrigen vermögen.

Die Emulgatoren werden in das erfindungsgemäße Verfahren insbesondere dann eingesetzt, wenn mit ihrer Hilfe die Grenzflächenspannung den Wert von 10 mN/m, bevorzugt den Wert von l mN/m unterschreitet.

Die eingesetzte Menge an Emulgator richtet sich wiederum nach den oben genannten Kriterien und kann leicht durch entsprechende Vorversuche ermittelt werden. Dabei wird selbstverständlich nur die Menge an Emulgatoren eingesetzt, die für das Gelingen des erfindungsgemäßen Verfahren unbedingt nötig ist. Üblicherweise beträgt die Menge an Emulgatoren 20 bis 0,1 Gew. Teile, insbesondere 10 bis 0,5 Gew.-Teile, bezogen auf das eingesetzte Polymer. Selbstverständlich können die Emulgatoren wie erwähnt alleine oder im Gemisch untereinander eingesetzt werden. Das günstigste Mischungsverhältnis ist wiederum durch entsprechende Vorversuche leicht zu ermitteln.

Für das erfindungsgemäße Verfahren ist es von Bedeutung, daß die Scherung mit einer Scherleistung durchgeführt wird, die in den zuvor erwähnten Bereichen liegt. Ist z.B. die Scherleistung zu gering, so erhält man keine stabile Dispersion. Ist die Scherleistung zu hoch, so liegt die Teilchengröße nicht im angestrebten Zielbereich.

Nachdem die Wasser-in-Öl-Emulsion einer entsprechenden Scherung unterworfen wurde, kehrt sich die Wasser-in-Öl-Emulsion in eine Öl-in-Wasser-Emulsion um. Dies ist u.a. dadurch zu erkennen, daß die vor der Scherung praktisch klare Emulsion sich in eine milchig-trübe Emulsion umwandelt. Darüberhinaus ist es für das erfindungsgemäße Verfahren wichtig, daß vor der Phasenumkehrung durch Scherung eine stabile Wasser-in-Öl-Emulsion, wenn auch nur kurzfristig, vorliegt.

Bei dem hier bevorzugt eingesetzten Strahldispergator handelt es sich um eine Druckentspannungsdüse, die einen wesentlich höheren Wirkungsgrad als Hochdruckhomogenisatoren hat. Eine Beschreibung dieser Düse wird in EP 0101007 gegeben. Schon bei 50 bar Homogenisierdruck werden Emulsionen gleicher Partikelgröße erreicht wie mit dem Hochdruckhomogenisator bei 200 bar.

Erfindungsgemäß kann die Scherung der Wasser-in-Öl-Emulsion beispielsweise auch mit Hilfe von Rotor-Stator-Dispergiermaschinen, wie z.B. Kolloid-Mühlen, Zahnkranzdispergiermasschinen und Hochdruckhomogenisatoren, jedoch bevorzugt mit den genannten Strahldispergatoren durchgeführt werden.

Das erfindungsgemäße Verfahren kann - wie schon skizziert - sowohl diskontinuierlich als auch kontinuierlich durchgeführt werden. Die Entfernung des für das erfindungsgemäße Verfahren verwendete Lösungsmittel wird in üblicher Weise durchgeführt, beispielsweise durch Destillation, durch Druckentspannung oder mit Hilfe der Umkehrosmose. Es eignet sich auch die sogenannte Cyclonentgasung oder das Versprühen mittels Düsen.

Nachdem das Lösungsmittel entfernt wurde, wird die Dispersion auf die für den jeweiligen Verwendungszweck optimale Konzentration aufkonzentriert. Dabei kommen die bekannten und üblichen Verfahren zur Anwendung, wie Destillation, Ultrafiltration, Zentrifugation, Dialyse und die sogenannte Aufrahmung mit Hilfe entsprechender Aufrahmmittel, wie Alginate, wobei sich eine konzentrierte Dispersion (Rahm) bildet und eine wäßrige, polymerarme Phase, die wieder als wäßrige Phase, gegebenenfalls unter Zusatz von neuem Emulgator in den Prozeß, zurückgeführt werden kann.

Die nach dem erfindungsgemäßen Verfahren hergestellten stabilen Dispersionen besitzen eine Konzentration an Polymer von 10 bis 70, bevorzugt von 40 bis 60 Gew.-% (bestimmt als Feststoffanteil in der Dispersion).

Die Temperatur bei der das erfindungsgemäße Verfahren durchgeführt wird, liegt im allgemeinen im Bereich von 10 bis 80°C, bevorzugt 20 bis 50°C. Das erfindungsgemäße Verfahren kann sowohl bei Normaldruck- als auch bei erhöhtem Druck durchgeführt werden. Der erhöhte Druck ist beim erfindungsgemäßen Verfahren lediglich nötig, um die zu homenisierenden Phasen durch den Strahldispergator zu fördern. Homogenisierung und Phasenumkehr erfolgen im Scherfeld der Düse.

Die nach dem erfindungsgemäßen Verfahren hergestellten, stabilen Polymerdispersionen mit einem definierten Polymergrößenbereich besitzen nur noch geringe Mengen an eingesetzten Emulgatoren (im Bereich von 0,1 bis 10 Gewichtsteile) und eignen sich daher insbesondere für die Herstellung von hochwertigen Tauchartikeln, Laminaten, Klebstoffdispersionen und Gewebebeschichtungen.

Im Vergleich zum bekannten Stand der Technik zeichnet sich das erfindungsgemäße Verfahren insbesondere durch folgende Vorteile aus: Gezielte Partikelgrößenverteilung, hohe Feststoffkonzentrationen, geringe in der Dispersion verbleibende Emulgatormengen, geringer apparativer Aufwand und Energien. Dadurch wird das erfindungsgemäße Verfahren besonders wirtschaftlich.

Die in den nachfolgenden Beispielen beschriebenen Polymerteilchengrößen wurden mittels Ultrazentrifuge bestimmt, die Viskositäten der organischen Phase gemessen mit dem Rotationsviskosimeter bis zu einem Schergefälle von 100 l/s, die Grenzflächenspannung zwischen organischer und wäßriger Phase mit einem Ringtensiometer und die Teilchengröße des in der organischen Phase emulgierten Wassers durch Lichtmikroskopie.

### Beispiele

Die Auswahl der Scheraggregate zur Durchführung des beanspruchten Verfahrens kann sich im Prinzip nach praktischen Gesichtspunkten richten. Hier wurde der Strahldispergator als Dispergiervorrichtung hauptsächlich eingesetzt, weil sich besonders vorteilhaft feinteilige Dispersionen, sowohl kontinuierlich als auch diskontinuierlich herstellen lassen.

Ein Kennzeichen des Strahldispergators ist, vergleichsweise gut definierter Scherbedingungen zu erzeugen. Da das hier beanspruchte Verfahren unter besonderer Kontrolle der schon genannten Verfahrensparameter durchzuführen ist, ist das Verfahren auch besonders gut unter Einsatz des Strahldispergators durchzuführen.

Unabhängig von der Art des Dispergierapparates ist es jedoch ein Kennzeichen des erfindungsgemäßen Verfahrens, daß gegenüber dem Stand der Technik vergleichsweise geringere Dispergierleistungen erforderlich sind. Dies liegt daran, daß das Phasenumkehrverfahren anderen Dispergierverfahren in der Hinsicht überlegen ist, daß es die einfache Herstellung feinteiliger Dispersionen erlaubt.

Nachfolgend werden die durchgeführten Versuche zur Herstellung von Polymerdispersionen beschrieben.

Es wurden 4 verschiedene Verfahren zur Herstellung der Dispersionen angewendet:

Dies waren die Verfahren der Direktdispergierung (nicht erfindungsgemäß) und die Phasenumkehrverfahren (erfindungsgemäß), jeweils in diskontinuierlicher und kontinuierlicher Form.

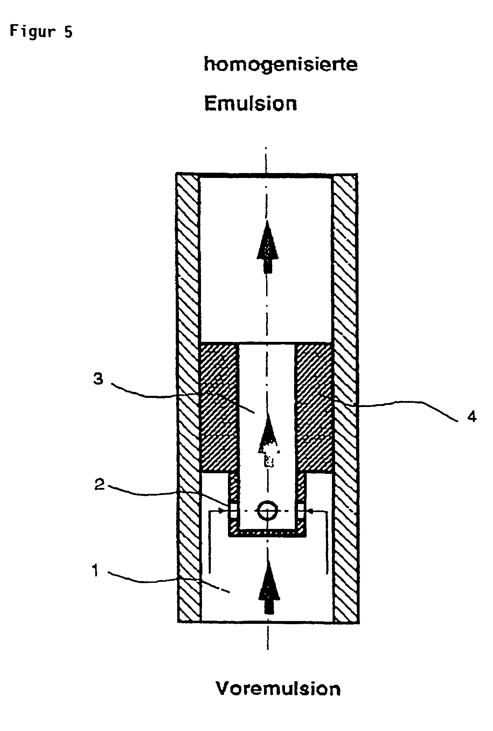

Die Versuche wurden mit einem Strahldispergator durchgeführt (siehe dazu Abb. 5).

Bei der erfindungsgemäßen Ausführung der Versuche wurde eine Voremulsion 1 durch die Düsenbohrungen 2 des Strahldispergators gepumpt und dabei fein verteilt.

Die so homogenisierte Emulsion 3 gelangt drucklos aus dem Strahldispergator. Für die Laborversuche 1 bis 19 und 37 bis 41 wurde eine Düse verwendet, deren Düsenkörper Bohrungen vom Querschnitt 0,5 mm und mit der Länge von 0,75 mm. Die Anzahl der Bohrungen betrug 6.

Für die Versuche 20 bis 36 wurde eine Düse verwendet, die 60 Bohrungen aufwies, mit jeweils einem Durchmesser von 0,75 mm und einer Länge von 1,1 mm.

### Beispiel 1 nicht erfindungsgemäß

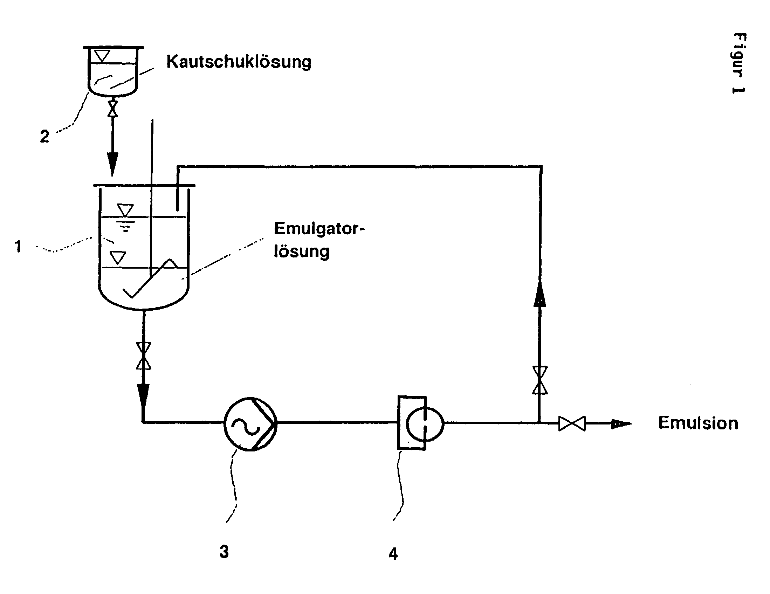

### Herstellung einer Bromobutyldispersion mittels diskontinuierlicher Direktdispergierung (Verfahrenstyp 1, siehe dazu Abbildung 1)

Es wurden folgende Lösungen hergestellt:
400 g einer 19% Bromobutylkautschuklösung in Hexan (Isomerenmischung)
600 g einer 0,6% wäßrigen Natriumdodecylbenzolsulfonat (Marlon A, Hüls AG)

Die Emulgatorlösung wird in dem gerührten Kreislaufbehälter 1 vorgelegt.

Die Kautschuklösung wird aus dem Behälter 2 unter Rühren in den Behälter 1 eingeleitet, so daß dabei eine noch grobteilige O/W-Emulsion entstand.

Dann wurde diese Voremulsion mittel der Druckerhöhungspumpe 3 über den Strahldispergator 4 rezirkuliert, um eine ausreichend feine Dispergierung zu erreichen. Der Druck über der Düse wurde auf 10 bar eingestellt. Die Zahl der Umläufe betrug 5.

In Tabelle 1 sind für dieses Beispiel und weitere Versuche neben dem zu dispergierenden Polymer, die verwendeten Lösungen und deren Konzentrationen, die Phasenverhältnisse und der Druck über der Dispergierdüse angegeben. Es wurde bei RT gearbeitet. Die Geometrie der Düse ist der Abb. 5 zu entnehmen.

In diesem Beispiel konnte keine stabile Dispersion erhalten werden: Die beiden Phasen (organisch und wäßrig) trennten sich nach kurzer Zeit wieder.

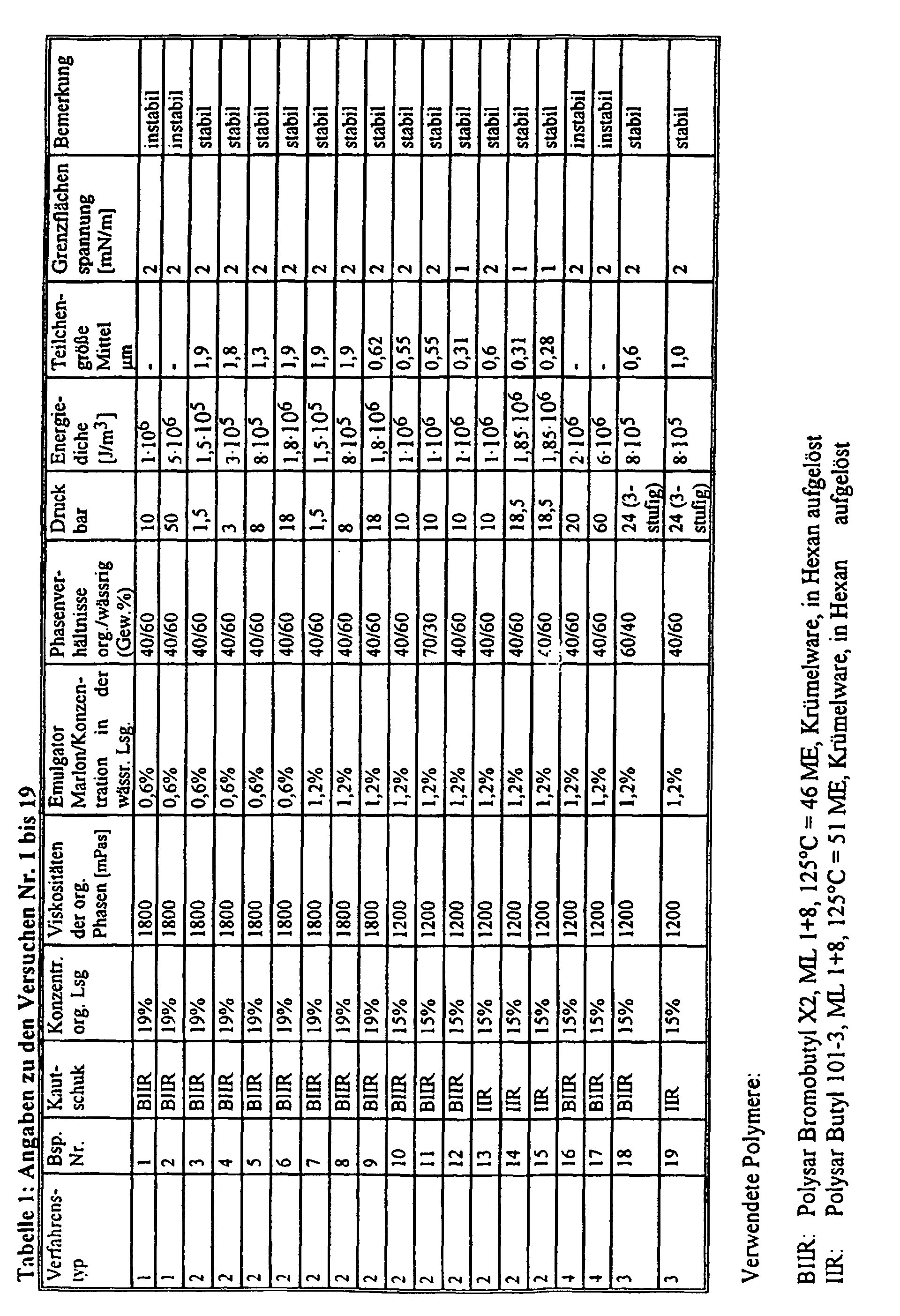

### Beispiel 2 nicht erfindungsgemäß

Es wurde wie bei Beispiel 1 verfahren, jedoch der Druck über der Düse auf 50 bar erhöht (s. Tabelle 1). Die Zahl der Umläufe betrug 5.

Es konnte keine stabile Dispersion erhalten werden.

### Beispiel 3 erfindungsgemäß

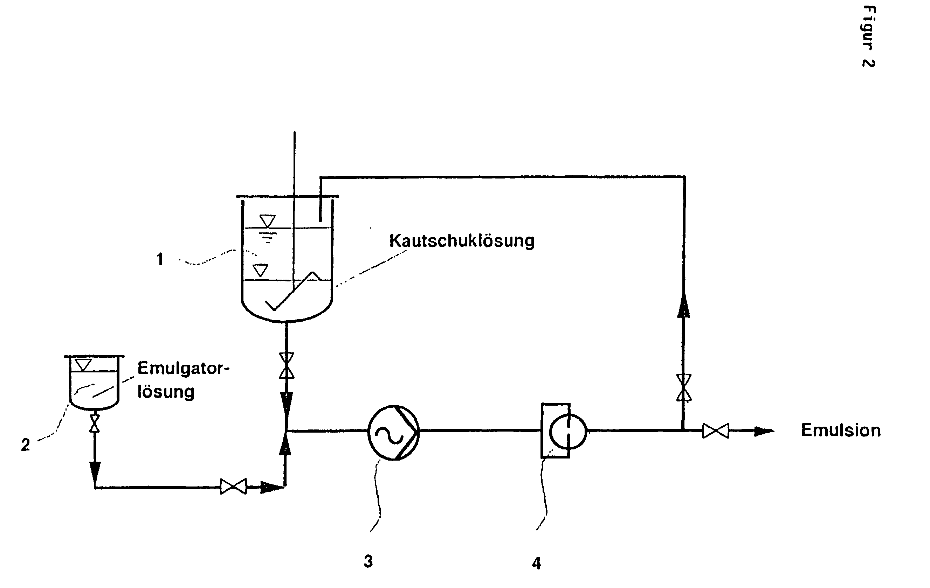

### Herstellung einer Brombutyldispersion mittels eines diskontinuierlichen Phasenumkehrverfahrens (s. Abb. 2)

Es wurden Lösungen wie in Beispiel 1 hergestellt (s. auch Tabelle 1).

Die Kautschuklösung wurde in dem Kreislaufbehälter 1 vorgelegt und über die Druckerhöhungspumpe 3 und den Strahldispergator 4 rezirkuliert. Gleichzeitig wurde die Emulgatorlösung aus dem Behälter 2 etwa im Verhältnis 1:5 (wäßrig/organisch) eingesaugt und feinteilig homogenisiert. Es entstand zunächst eine feinteilige W/O-Emulsion (erkennbar durch die Transparenz), die dann bei einer Konzentration von etwa 30 Gew.% Wasserphase in eine O/W-Emulsion invertierte. Wenn die Phasenumkehr erreicht ist, kann die Emulsionsherstellung im Prinzip abgebrochen werden. Die O/W-Emulsion hatte nach der Phasenumkehr ein milchig-weißes Aussehen.

Die so erhaltene O/W-Dispersion hatte nach Lichtmikroskop einer Teilchengröße von 1- 4 µm. Vor der Phaseninversion hatte die W/O-Emulsion eine Teilchengröße von 1-5 µm (Lichtmikroskop). Bei allen erfindungsgemäßen Beispielen wurden ebenfalls Teilchengröße in diesem Bereich gefunden.

Diese noch lösungsmittelhaltige Dispersion wurde durch Ausrühren am Vakuum (anfänglich 196 mbar) bei 65-75°C vom Lösungsmittel befreit und erwies sich als stabil.

Danach wurde die lösungsmittelfreie Dispersion durch Zusatz von Aufrahmmittel aufkonzentriert. Die Teilchengröße dieser Emulsion lag dann bei 1,9 µm.

**Das Verfahren zur Aufrahmung von Polymerdispersionen war wie folgt:**
1. Es wurde eine 1,5% Natriumalginatlösung wie folgt hergestellt:
   Es werden 986 g demineralisiertes Wasser in einem Rührbehälter vorgelegt und auf 80°C erhitzt, dann wurden 14 g Alginat unter Rühren langsam zugegeben und nach vollständiger Auflösung unter Rühren abkühlen lassen. Diese Alginatlösungen wurden jeweils nach 3 bis 4 Tagen wieder frisch hergestellt.
2. Die Dispersion wurde mittels einer 3% NaOH-Lösung auf einen pH von ca. 8-9 eingestellt. Dann wurden 0,5 Teile einer 1,5%igen Alginatlösung (Manutex, Fa.Kelco Int. Ltd., London) bezogen auf 100 Teile Polymer unter Rühren zugesetzt und die Mischung stehen gelassen.
   Nach 24 Stunden konnte eine Phasentrennung in eine obere, konzentrierte Dispersionsphase (Rahm) (durchschnittl. Feststoffgehalt von 40-55%) und klare bis leicht trübe untere Serumphase beobachtet werden, die einen Feststoffgehalt von < 1% aufwies.
   In der Regel ist es vorteilhaft, die optimale Menge Alginat vorab durch Reihenversuche zu ermitteln, indem die Menge Alginat variiert wird und die Trenngeschwindigkeit und Trenngüte beobachtet wird. Es ist bekannt, daß zu hohe Mengen Aufrahmmittel die Aufrahmung negativ beeinflussen können.

### Beispiele 4 bis 6 erfindungsgemäß

Es wurde wie bei Beispiel 3 verfahren, jedoch wurden unterschiedliche Drücke über der Dispergierdüse eingestellt (s. Tabelle 1).

Es konnte in allen Fälle eine stabile Dispersion erhalten werden, die vom Lösungsmittel befreit und durch Aufrahmung aufkonzentriert wurden.

### Beispiele 7 bis 9 erfindungsgemäß

Es wurde wie bei Beispiel 4-6 verfahren, jedoch wurden höhere Emulgatormengen eingesetzt (s. Tabelle 1).

Es konnte in allen Fälle eine stabile Dispersion erhalten werden, die vom Lösungsmittel befreit und durch Aufrahmung aufkonzentriert wurden.

Die Teilchengrößen dieser Dispersionen waren kleiner als bei den Beispielen 4-6.

### Beispiele 10 bis 13 erfindungsgemäß

Es wurde wie in Beispiel 9 verfahren, jedoch wurde bei einem Druck von 10 bar dispergiert und die Art des Emulgators variiert (s. Tabelle 1). In Beispiel 13 wurde eine Butylkautschukdispersion hergestellt.

Es konnte in allen Fälle eine stabile Dispersion erhalten werden, die vom Lösungsmittel befreit und durch Aufrahmung aufkonzentriert wurden.

Es wurden sehr feinteilige Dispersionen erhalten.

### Beispiele 14 bis 15 erfindungsgemäß

Es wurde wie in Beispiel 13 verfahren, jedoch wurde eine Mischung von zwei verschiedenen Emulgatoren eingesetzt. (s. Tabelle 1).

Es konnte in allen Fälle eine stabile Dispersion erhalten werden, die vom Lösungsmittel befreit und durch Aufrahmung aufkonzentriert wurden.

Es wurden besonders feinteilige Dispersionen erhalten.

### Beispiele 16 nicht erfindungsgemäß

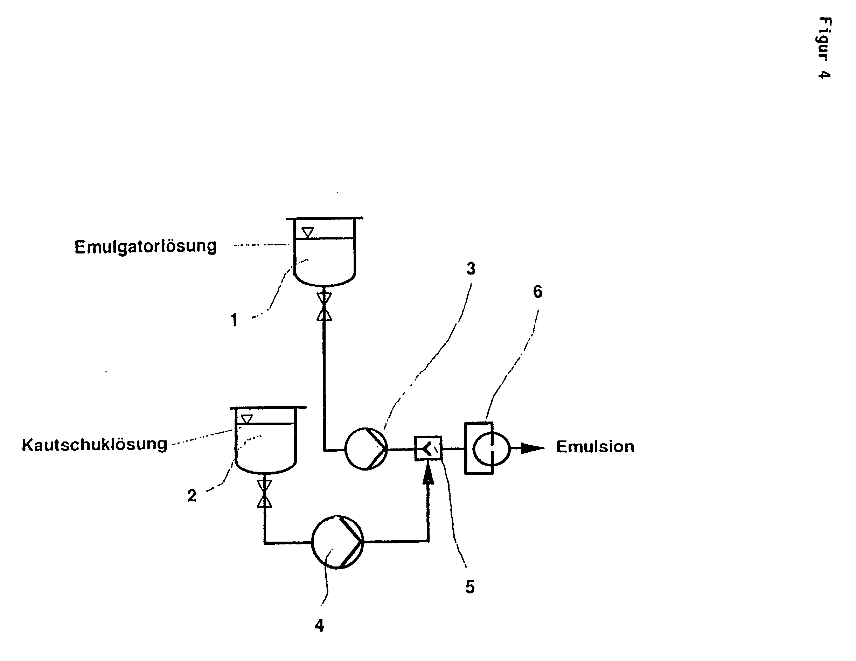

### Versuch zur Herstellung von Bromobutyldispersionen mittels des Verfahrens der kontinuierlichen Direktdispergierung (Verfahren 4, s. dazu Abb. 4)

Es wurde wie folgt verfahren:
Emulgatorlösung und Kautschuklösung wurden getrennt kontinuierlich aus den Vorlagebehältern 1 und 2 zusammengefahren. Die Druckerhöhung und die Dosierung der Emulgatorlösung erfolgte mit den Pumpen 3 und 4. In dem Mischer 5 wird die O/W-Voremulsion gebildet und in dem Strahldispergator 6 homogenisiert.

Es wurde eine instabile Dispersion erhalten, die sich nach kurzer Lagerzeit wieder in zwei Phasen trennte.

### Beispiel 17 nicht erfindungsgemäß

Es wurde wie bei Beispiel 16 Verfahren, jedoch der Druck über der Dispergierdüse auf 60 bar erhöht.

Es konnte dennoch keine stabile Dispersion erhalten werden.

### Beispiel 18 erfindungsgemäß

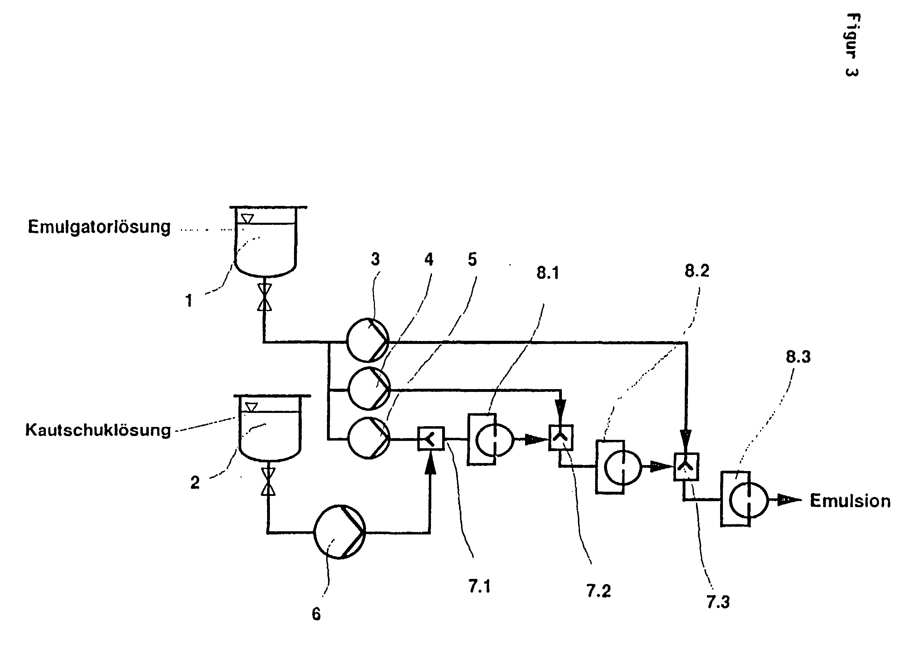

### Herstellung einer Bromobutyldispersion mittels kontinuierlichen Phasenumkehrverfahrens (Verfahren 3, s. dazu Abb. 3)

Emulgatorlösung und Kautschuklösung werden getrennt kontinuierlich aus den Vorlagebehältern 1 und 2 zusammengefahren ( zu den Bezeichnungen s. Abb. 3). Die Druckerhöhung und Dosierung der Kautschuklösung erfolgt mit der Pumpe 6 in den Mischer 7.1, Druckerhöhung und Dosierung der in drei Teilströme aufgeteilten Emulgatorlösung erfolgt mit den Pumpen 5,4, und 3 in die Mischer 7.1, 7.2 und 7.3. Nach jedem Mischer wird mittel eines Strahldispergators homogenisiert. Durch diese abgestufte Fahrweise wurde gezielt eine feinteilige W/O-Emulsion hergestellt.. Die Teilmengen an Emulgatorlösung wurden so eingestellt, daß erst im Strahldispergator 8.3 die Phasenumkehr erfolgt.

Es wurden 3 nacheinandergeschaltete, baugleiche Düsen eingesetzt, wobei das Druckgefalle über alle Düsen 24 bar betrug.

Es wurde eine stabile Dispersion erhalten.

Der Vergleich der Beispiele 16 und 17 (beide nicht erfindungsgemäß) mit dem erfindungsgemäßen Beispiel 18 verdeutlicht, daß es für die erfolgreiche Durchführung des hier beschriebenen Dispergierverfahrens von entscheidender Wichtigkeit ist, eine kontrollierte Phasenumkehr von einer W/O-Emulsion in eine O/W-Emulsion durchzuführen.

Erfolgt die Phasenumkehr zu früh oder sogar schon während des Kontaktes der beiden Phasen werden nur instabile Dispersionen erhalten. Nach dem Stand der Technik werden solche auftretenden Schwierigkeiten nur durch sehr hohe Scherleistungen überwunden. Das hier beschriebene Verfahren zeigt, daß eine sorgfältige Abstimmung des Zeitpunktes der Phasenumkehr es ermöglicht, stabile Dispersionen herzustellen. Bei den kontinuerlichen Verfahren ist neben der zeitlichen auch die örtliche Festlegung der Phasenumkehr wichtig. Weiterhin ist es erforderlich die Dosierung der Phasen so zu gestalten, daß keine vorzeitige Phasenumkehr etwa durch zu rasche Dosierung der wäßrigen Phase eintritt.

### Beispiel 19 erfindungsgemäß

Es wurde wie in Beispiel 18 gearbeitet, jedoch wurde Butylkautschuk dispergiert. Es wurde ebenfalls eine stabile Dispersion erhalten.

### Beispiele 20 bis 36 erfindungsgemäß

Herstellung einer Butylkautschukdispersion mittels des diskontinuierlichen Phasenumkehrverfahrens:

| Prinziprezeptur: | |
|---|---|
| Emulgatorlösung | 1,76 kg Kaliumoleat |
| | 144,94 kg VE-Wasser |
| | |
| Kautschuklösung | 76,8 kg Polymerlösung (Cement aus der Herstellung von Butylkautschuk 2030 der Fa. Bayer) 19,1% in Hexan |
| | 21 kg n-Hexan zur Einstellung einer Konzentration von 15%. |

Aus einem 400 l Behälter wurde die Kautschuklösung so im Kreis gefahren, daß ein Druckabfall von 10 bzw. 20 bar in der Düse zu verzeichnen war. Die Emulgatorlösung wird aus der Vorlage zur Kautschuklösung hinzu dosiert, wobei ein Volumenverhältnis von 1/10 (wäßrige zu organischer Phase) eingehalten wurde.

Diese Dosierung war nach einer Zeit von 45 min beendet.

Nach Ende der Dosierung der Emulgatorlösung wurde noch ca. 1. Stunde im Kreis gefahren. Der Emulgiervorgang war dann abgeschlossen.

Die Destillation wurde in einem Rührkessel durchgeführt, wobei zunächst die Hauptmenge Hexan bei Normaldruck abdestilliert wurde. Zu Ende der Destillation wurde Vakuum angelegt, um die Restmengen an Hexan zu entfernen.

Die Aufrahmung erfolge wie beschrieben. Die optimale Menge Alginat wurde durch Vorversuche ermittelt.

Nach dieser Rezeptur wurden die Tabelle 2 aufgelisteten Dispersionen hergestellt.

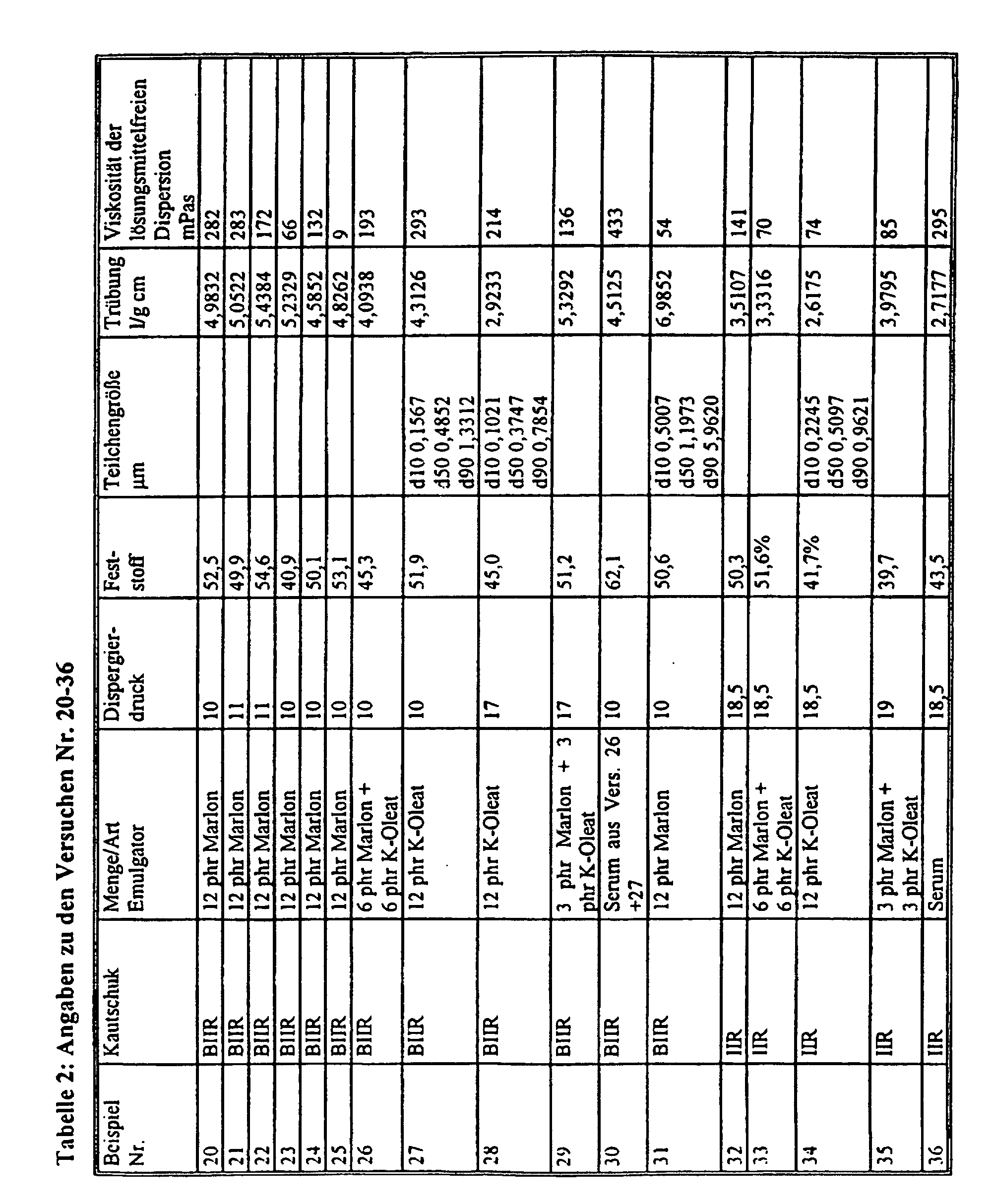

Eingesetztes Polymer für die Versuche 20 bis 25 :
Polysar Bromobutyl 2030 - 1, hexanische Lösung aus Antwerpen, Konzentration 18%, ML 1+8, 125°C = 34.
Viskosität der Lösung: 1600 mPas

Eingesetztes Polymer für die Versuche 26 bis 30:
Polysar Bromobutyl 2030 - 1, hexanische Lösung aus Antwerpen, Konzentration 18% ML 1+8, 125°C = 32 ME
Viskosität der Lösung: 1550 mPas
Eingesetztes Polymer für Versuch 31:
Polysar Bromobutyl X2, Ballenware aus Antwerpen, ML 1+8, 125°C = 46 ME

Eingesetztes Polymer für die Versuche 32 bis 36 :
Basis Polymer vor Halogenierung für Bromobutyl 2030, hexanische Lösung aus Antwerpen, Konzentration ca. 18%, ML 1+8, 125°C = 39 ME

Diese Tabelle 2 listet die Versuchsparameter und die Ergebnisse der Versuche auf.

Diese Versuche zeigen, daß sich das erfindungsgemäße Verfahren leicht im Maßstab vergrößern läßt.

Es zeigte sich außerdem, daß das bei der Aufrahmung gewonnene emulgatorhaltige Serum sich direkt wieder für eine weitere Dispergierung von Polymerlösung einsetzen läßt. Dies war überraschend, weil das so zurückgeführte Serum neben Emulgator auch noch Aufrahmmittel einhält. Dieser Gehalt an Aufrahmmittel beeinflußt den Dispergierprozeß jedoch keinesfalls negativ. Die dann nachfolgende Aufrahmung kommt dadurch mit weniger Aufrahmmittel aus.

Diese Verfahrensform der Rückführung des Serums zur Dispergierung bewirkt auch, daß nur soviel Emulgator in das Verfahren eingesetzt werden muß, wie durch das fertige Endprodukt abgeführt wird.

Weiterhin wird durch diese Verfahrensform belegt, daß eine solches Verfahren weitgehend frei von Abfällen ausgeführt werden kann.

### Beispiel 37 bis 40 erfindungsgemäß

### Herstellung einer Bromobutyldispersion mittels des diskontinuierlichen Phasenumkehrverfahrens, Variation der Dispergierdrücke

Es wurde wie in Beispiel 3 verfahren, jedoch wurden die Drücke über der Dispergierdüse variiert (s. Tabelle 3).

Es zeigte sich, daß mit zunehmendem Druck die Teilchengrößen (Bestimmung mittels UZ) kleiner werden, erkenntlich z.B. an den d10, d50 und d90 Werten.

**Tabelle 3:**

| **Werte aus den Teilchengrößerverteilungen der Dispersionen aus den Beispielen 37 bis 40** | | | | |
|---|---|---|---|---|
| Beispiel | 37 | 38 | 39 | 40 |
| Homogenisierdruck / Kennziffern für die Teilchengrößen | 1,5 bar | 3 bar | 8 bar | 18 bar |
| d₀ [µm] | 0,1322 | 0,3899 | 0,2073 | 0,1614 |
| d₁₀ [µm] | 0,8286 | 0,8545 | 0,4248 | 0,4247 |
| d₂₀ [µm] | 0,10539 | 1,0563 | 0,5920 | 0,5921 |
| d₃₀ [µm] | 1,2829 | 1,2635 | 0,7938 | 0,7710 |
| d₄₀ [µm] | 1,5653 | 1,5041 | 1,0170 | 0,9577 |
| d₅₀ [µm] | 1,9084 | 1,8355 | 1,2829 | 1,1460 |
| d₆₀ [µm] | 2,3410 | 2,2926 | 1,7149 | 1,3953 |
| d₇₀ [µm] | 3,0067 | 2,8621 | 2,1797 | 1,7715 |
| d₈₀ [µm] | 3,8633 | 3,7503 | 2,9928 | 2,2419 |
| d₉₀ [µm] | 5,8358 | 5,6382 | 4,0233 | 3,1052 |
| d₁₀₀ [µm] | 9,9862 | 8,1192 | 7,7883 | 5,4963 |

### Beispiel 41 erfindungsgemäß

Eine wie in Beispiel 3 hergestellte Dispersion wurde anstatt durch Aufrahmung mittels Zentrifugation aufkonzentriert:

Dazu wurde eine Bromobutyldispersion mit einem Feststoffgehalt von 12% in eine Laborzentrifuge gefüllt und bei 5000 Umdrehungen pro Minute für 10 min zentrifugiert.

Es wurde seine saubere Phasentrennung in eine Rahmphase von ca. 45% Feststoffgehalt und eine wäßrige Phase erhalten.

Dieses Beispiel belegt, daß es möglich ist, die Methode der Aufkonzentrierung zur Erzielung des gewünschten Feststoffgehaltes frei zu wählen.

## Patentansprüche

1. Verfahren zur Herstellung von stabilen Polymerdispersionen mit Polymerteilchengrößen von 0,1 bis 10 µm [d-50, bestimmt mittels Ultrazentrifuge], **dadurch gekennzeichnet, daß** man eine Wasser-in-Öl-Emulsion, bestehend aus einem in mit Wasser nicht mischbaren, organischen Lösungsmittel gelösten Polymer (organische Phase) und einer wäßrigen Phase, wobei die Viskosität der organischen Phase 1,0 bis 20.000 mPa.s (gemessen bei 25°C), die Grenzflächenspannung zwischen organischer und wäßriger Phase 0,01 bis 30 mN/m, die Teilchengröße des in der organischen Phase emulgierten Wassers 0,2 bis 50 µm beträgt und das Volumenverhältnis von organischer Phase zu wäßriger Phase im Bereich von 80:20 bis 20:80 liegt, einer Scherung mit einer Scherleistung von 1 10³ bis 1 10⁸ Watt pro cm³ unterwirft, wobei sich die Wasser-in-Öl-Emulsion in eine Öl-in-Wasser-Emulsion umkehrt.

2. Verfahren nach Anspruch 1, **dadurch gekennzeichnet, daß** die Viskosität der organischen Phase 10 bis 20.000 mPas, die Grenzflächenspannung zwischen organischer und wässriger Phase 0,5 bis 30 mN/m, die Teilchengröße des in der organischen Phase emulgierten Wassers 1 bis 25 µm beträgt und das Volumenverhältnis von organischer Phase zu wässriger Phase im Bereich von 70:30 bis 30:70 liegt und die Scherleistung im Bereich von 1·10⁶ bis 1·10⁷ Watt/cm³ liegt.

## Claims

1. A process for preparing stable polymer dispersions with polymer particle sizes of 0.1 to 10 µm [d₅₀ determined in an ultracentrifuge], **characterized in that** a water-in-oil emulsion, comprising a polymer dissolved in an organic solvent which is immiscible with water (organic phase) and an aqueous phase, wherein the viscosity of the organic phase is 1.0 to 20,000 mPa·s (measured at 25°C), the surface tension between organic and aqueous phase is 0.01 to 30 mN/m, the particle size of the water emulsified in the organic phase is 0.2 to 50 µm and the ratio by volume of organic phase to aqueous phase is in the range of from 80:20 to 20:80, is subjected to a shear process at a shear power of 1 x 10³ to 1 x 10⁸ Watts/cm³, wherein the water-in-oil emulsion is converted into an oil-in-water emulsion.

2. Process according to claim 1, **characterized in that** the viscosity of the organic phase is 10 to 20,000 mPa·s, the surface tension between the organic and aqueous phase is 0.5 to 30 mN/m, the particle size of the water emulsified in the organic phase is 1 to 25 µm, and the ratio by volume of organic phase to aqueous phase is in the range of from 70:30 to 30:70, and the shear power is in the range of from 1 x 10⁶ to 1 x 10⁷ Watts/cm³.

## Revendications

1. Procédé pour préparer des dispersions de polymères stables présentant des granulométries de polymères de 0,1 à 10 µm (d-50 déterminées par ultra-centrifugation),
**caractérisé en ce qu'**
une émulsion eau dans l'huile, constituée d'un polymère dissous dans un solvant organique non miscible à l'eau (phase organique) et d'une phase aqueuse, la viscosité de la phase organique étant de 1,0 à 20.000 mPas (mesurée à 25°C), la tension interfaciale entre la phase organique et la phase aqueuse étant de 0,01 à 30 mN/m, la granulométrie de l'eau émulsionnée dans la phase organique étant de 0.2 à 50 µm et le rapport volumique de la phase organique à la phase aqueuse se trouvant dans une plage de 80/20 à 20/80, est soumise à un cisaillement dont la puissance de cisaillement de 1.10³ à 1.10⁸ watts par cm³, provoque l'inversion de l'émulsion eau dans l'huile en une émulsion huile dans l'eau.

2. Procédé selon la revendication 1,
**caractérisé en ce que**
la viscosité de la phase organique est de 10 à 20.000 mPas, la tension interfactale entre la phase organique et la phase aqueuse est de 0,5 à 30 mN/m. la granulométrie de l'eau émulsionnée dans la phase organique est de 1 à 25 µm et le rapport volumique de la phase organique à la phase aqueuse se trouve dans une plage de 70/30 à 30/70, et la puissance de cisaillement se trouve entre 1.10⁶ et 1.10⁷ watts/cm³.
